# EUROPEAN PATENT APPLICATION

(11) **EP 3 330 948 A1**
(43) Date of publication of application: **06.06.2018**
(21) Application number: 16829732.3
(22) Date of filing: 29.06.2016
(51) Int. Cl.: G09B 27/08

(54) **THREE-DIMENSIONAL GLOBE JIGSAW PUZZLE STRUCTURE**

(30) Priority: 29.07.2015 CN 201520557123 U
(71) Applicant: Chiang, Ming-Ta, Taipei 11091 (TW)
(72) Inventor: WU, Ming-yuan, Taipei 11060 (TW)
(74) Representative: Cabinet Chaillot
(86) International application number: PCT/CN2016/087577
(87) International publication number: WO 2017/016366

(57) **Abstract**

Disclosed is a three-dimensional globe jigsaw puzzle structure (300), which is an educational aid in the form of a jigsaw puzzle of a globe for users to learn geographical knowledge by working on a jigsaw puzzle. The structure comprises a globe (200) and a plurality of puzzle plates (210) that can be put together and attached to the globe (200) through magnetic attraction force. The shapes of the puzzle plates (210) are corresponding to a specific land region (230A) and a water region (230B) at the same time or separately. In addition, a back side of the puzzle plate (210) also comprises a prompt unit (213) for providing prompt information, and an inside of the puzzle plate (210) is further provided with a working unit (212) for providing voice information to prompt the users by audio signals of related geographical information corresponding to the puzzle plate (210).

## Description

### BACKGROUND OF THE INVENTION

### Field of Invention

The present invention relates to an education tool, and more particularly to a jigsaw puzzle type globe aid, and specifically to a three-dimensional globe jigsaw puzzle structure with providing prompt information and the puzzle plates having audio units.

### Related Art

An understanding of geography is a basic fundamental of education. However, it can be difficult for students to grasp physical relationships or features of various countries of continents with the current educational tools, such as the conventional flat two-dimensional map. The conventional flat two-dimensional map is typically a printed piece of paper containing outlines of various countries. When used as a learning tool, students must solely rely on memorization in order to learn the various countries on the map. However, it is difficult for students to learn relationships between countries, country locations, and shapes of countries as the countries printed on the map are fixed.

A globe is another conventional tool to learn geography. Outlines of countries of the world are printed on a paper which is then adhered to a round cardboard ball. While students can obtain a better sense of country location than with a map, the printed map of the globe is fixed and the student has difficulty learning country shape.

Jigsaw puzzles are also an educational aid for players to fit puzzle pieces together to form a single picture. While challenging and fun the shape of the individual puzzle pieces bear no relationship with the content or image printed on the piece. Therefore, players tend to rely on trying to fit pieces in various locations until they find the proper position. This disadvantage makes conventional jigsaw puzzles an inferior learning tool.

Therefore, there is need for an improved means of effectively providing and learning geographical information in an entertaining and informative manner.

### SUMMARY OF THE INVENTION

The present invention overcomes the above-described and other problems and disadvantages in the prior art by providing a three-dimensional globe jigsaw puzzle structure for users to learn geographical information directly by the jigsaw puzzle.

To achieve the above objection, the present invention provides:
A three-dimensional globe jigsaw puzzle structure comprising a globe and a plurality of puzzle plates adapted to be attached to the globe. The puzzle plate comprises a prompt unit for providing image information related to geographical information corresponding to the puzzle plate, and the prompt unit is disposed on a back side of the puzzle plate.

The puzzle plate further comprises a working unit for providing voice information by audio signals related to geographical information corresponding to the puzzle plate, and the working unit is disposed inside the puzzle plate.

The working unit comprising:
a memory to store voice information related to geographical information, which is disposed inside the puzzle plate;
a micro-switch to generate a start signal to the memory, which is eclectically-connected to the memory;
a speaker to broadcast the audio signals related to geographical information, which is eclectically-connected to the memory; and
a battery supplying a necessary working power to the working unit, which is eclectically-connected to the memory.

The image information related to geographical information includes a country flag accessory.

The image information related to geographical information are Braille dots.

The globe is made of a metal material and comprising longitudinal and latitudinal indicators, the puzzle plates are made of magnetic materials to attach to the globe.

The puzzle plates are formed in a shape of a land mass or a water mass.

The three-dimensional globe jigsaw puzzle structure further comprises a resting base or a mounting base for holding the globe.

The puzzle plate has a terrain contour.

The puzzle plate comprising a magnetic layer and a printed layer.

Therefore, via the above structure the users would learn geographical information directly by the jigsaw puzzle in an entertaining manner. In the three-dimensional globe jigsaw puzzle structure of the present invention, a back side of the puzzle plate also comprises a prompt unit for providing prompt information, and an inside of the puzzle plate is further provided with a working unit for providing voice information to prompt the users by audio signals of related geographical information corresponding to the puzzle plate. That would further enhance the user's impression and facilitate the operation for visually impaired users. The three-dimensional globe jigsaw puzzle structure of the present invention is a flexible teaching aids. It is easy to change difficulty and learners by changing the type of the puzzle plates. For example, the continent type puzzle plates may provide to the beginners or lower grade students. The advanced country puzzle plates may provide to the experts or upper grade students. In other words, different type students may learn by the same globe with different puzzle plates. Moreover, the users may learn the concept of geography easily by providing voice information via the working unit.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given hereinbelow illustration only, and thus are not limitative of the present invention, and wherein:
FIG. 1 is a drawing illustrating an embodiment of the present invention;
FIG. 2A is a drawing illustrating a top view of the puzzle plate of the present invention;
FIG. 2B is a drawing illustrating a side view of the puzzle plate of the present invention;
FIG. 2C is a drawing illustrating an assembly embodiment of the present invention;
FIG. 3 is a drawing illustrating an embodiment of the puzzle plate of the present invention;
FIG. 4A is a drawing illustrating an embodiment of the mounting base of the present invention;
FIG. 4B is a drawing illustrating an embodiment of the resting base of the present invention;
FIG. 4C is a drawing illustrating an assembly embodiment of the resting base of the present invention;
FIG. 5 is a drawing illustrating an embodiment of the working unit of the present invention.

Wherein
200 globe
201 longitude
202 latitude
210 puzzle plate
211 contour
212 working unit
213 prompt unit
214 printed layer
215 magnetic layer
230A land mass
230B water mass
240 mounting base
250 resting base
300 three-dimensional globe jigsaw puzzle structure
2121 micro-switch
2122 battery
2123 memory
2124 speaker

### DETAILED DESCRIPTION OF THE INVENTION

Reference will now be made in detail to the preferred embodiments of the present invention, examples of which are illustrated in the accompanying drawings. Wherever possible, the same reference numbers are used in the drawings and the description to refer to the same or like parts.

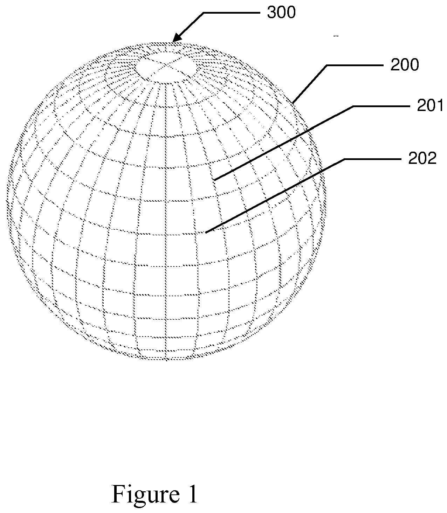

Please refer to FIG. 1, which is a drawing illustrating an embodiment of the three-dimensional globe jigsaw puzzle structure of the present invention. As shown, the three-dimensional globe jigsaw puzzle structure 300 of the present invention is formed in the shape of a globe 200. For ease in manufacture the globe 200 includes, for example, two half-sphere pieces that attach together. For example, one half-sphere has a rim flange to allow the two pieces to fit tightly together to form the globe 200. In an embodiment of the present invention the two half-sphere pieces are attached together prior to delivery to the user or distributor. In another embodiment the two half-sphere pieces are attached together by the user. In an embodiment of the present invention the two half-sphere pieces fit together and the attaching point forms a line representing the equator. This allows the user to additionally learn information regarding the two hemispheres of the earth. the globe 200 further includes markings that indicate longitude 201 and latitude 202. In this embodiment the longitudinal 201 and latitudinal 202 indicators provide a reference for the user. Additionally, the longitudinal and latitudinal information is provided on the puzzle piece, the user can more easily locate the proper position for the puzzle piece.

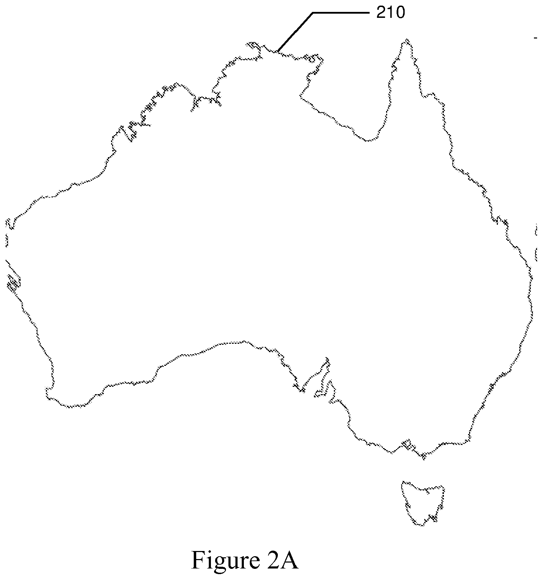

Please refer to FIG. 2A, which is a drawing illustrating a top view of the puzzle plate of the present invention. As shown, the puzzle plate 210 is formed in the shape of a land mass such as, for example, a country, a continent, a state, a province, a region, a territory or a water mass such as, for example, a lake, an ocean, or a sea. Since the shape of the puzzle plates 210 relate to the shape of the land mass or water mass, the user learns the geographical shape as well as the position/location of the land or water mass.

As shown in FIG. 2A, the puzzle plates 210 are in the shape of continents the user can obtain a better grasp of continental drift theory by positioning the puzzle pieces closer together or in their current position. In some embodiments of the present invention the puzzle plates 210 of the spherical puzzle further comprise data or information about the land mass or water mass such as country information, continent information, state information, province information, region information, territory information, land mass information, water mass information, mountain information, country flag, sports team information, advertising, population, logo, latitudinal information, longitudinal information, global positioning satellite information, or elevation information, or a combination of country information, continent information, state information, province information, region information, territory information, land mass information, water mass information, mountain information, country flag, sports team information, population, logo, latitudinal information, longitudinal information, global positioning satellite information, and elevation information. This further increases the amount of information the student can learn when using the spherical puzzle.

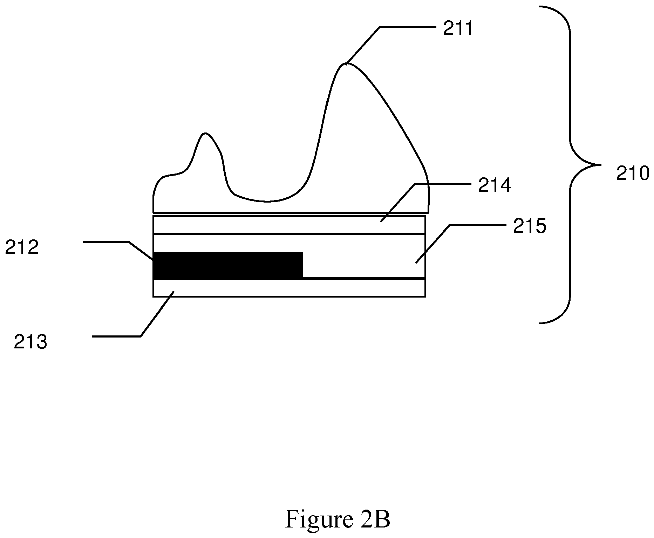

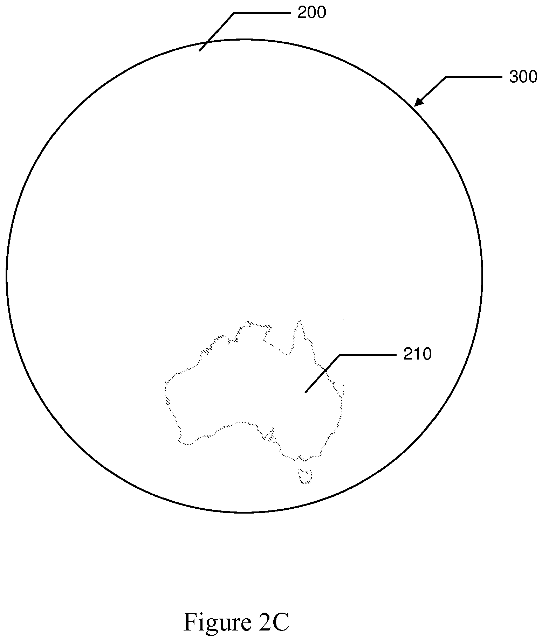

Please refer to FIG. 2B, which is a drawing illustrating a side view of the puzzle plate of the present invention. The puzzle plate 210 of the three-dimensional globe jigsaw puzzle structure 300 of the present invention, includes a magnetic layer 215 and a printed layer 214. The printed layer 214 is, for example, printed directly on the magnetic layer 215 or printed on a separate layer and adhered to the magnetic layer 215. The puzzle plate 210 is thin or flexible enough so that the puzzle plate 210 will automatically conform to the arc of the globe 200. The above embodiment is shown in FIG. 2C, which is a drawing illustrating an assembly embodiment of the present invention.

In this embodiment of the present invention the puzzle plate 210 further includes contours 211 to represent terrains, mountains, mountain ranges, or elevations. This allows the user to further learn information about terrains and elevations. The user can easily see and understand mountain formations of various countries. The puzzle plate 210 further includes a working unit 212 and a prompt unit 213. The working unit 212 is disposed inside the puzzle plate 210 to provide voice information of related geographical information corresponding to the puzzle plate 210. The prompt unit 213 is disposed on a back side of the puzzle plate 210 to provide image information related geographical information corresponding to the puzzle plate 210. The image information related to geographical information of the puzzle plate 210 may include a country flag accessory to make the users realize the related country corresponding to the puzzle plate 210. The image information related to geographical information may be Braille dots to facilitate the operation for visually impaired users.

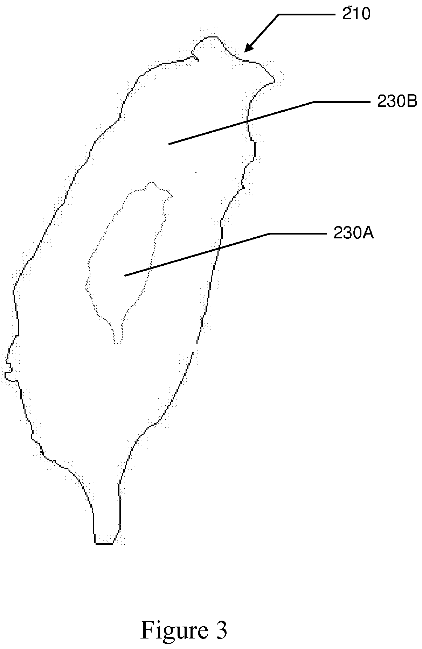

Please refer to FIG. 3, which is a drawing illustrating an embodiment of the puzzle plate of the present invention. Since some land masses 230A such as islands are quite small it is not feasible to form the puzzle plate 210 in a separate piece. Therefore, in an embodiment of the present invention the land mass 230A is combined with a water mass or a portion of a water mass 230B to form the puzzle plate 210. For example, an island or a plurality of islands is/are combined with an ocean puzzle piece. As shown in FIG. 6, the small land mass 230A is included with a portion of a water mass 230B. However, the land mass shape is retained by forming the portion of the water mass in the shape of the small land mass.

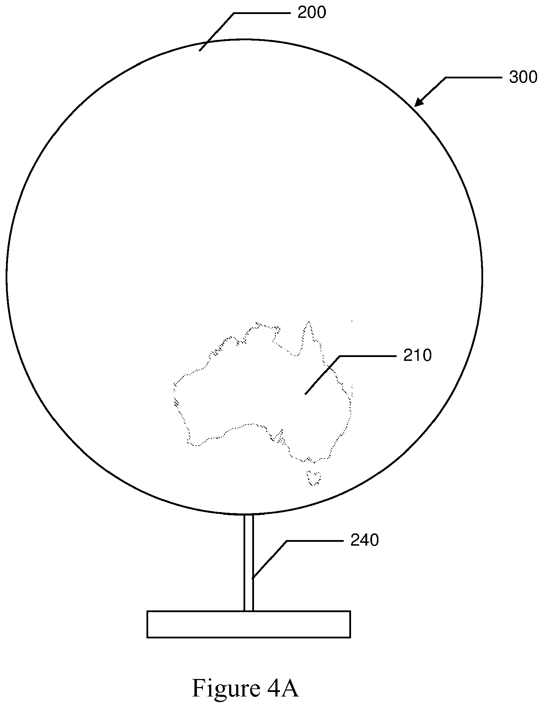

Refer to FIG. 4A, which is a drawing illustrating an embodiment of the mounting base of the present invention. The three-dimensional globe jigsaw puzzle structure 300 further includes a mounting base 240. The mounting base 240 allows the globe 200 to be positioned for display or use and allows the user to easily rotate or spin the globe 200.

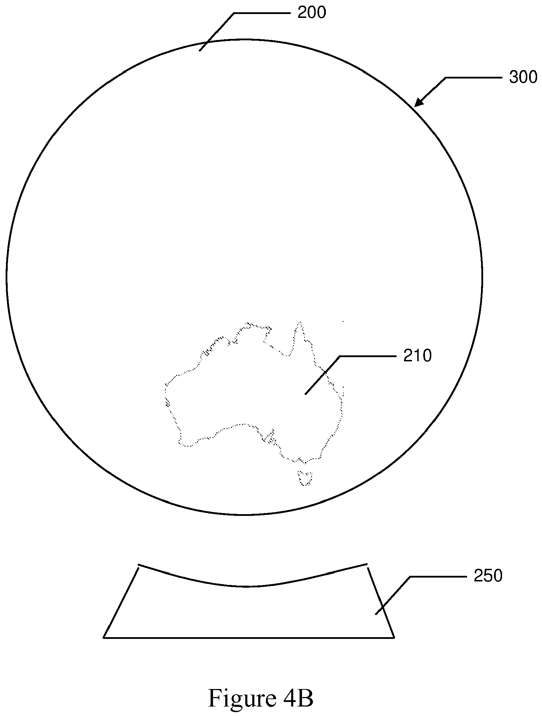

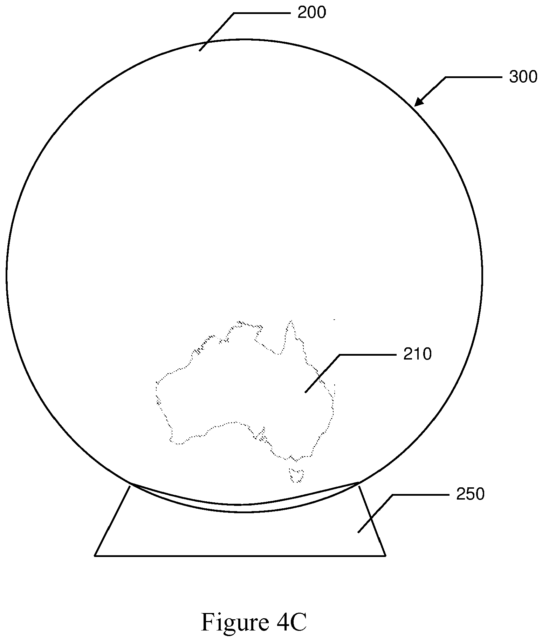

Refer to FIG. 4B, which is a drawing illustrating an embodiment of the resting base of the present invention. In the embodiment of the present invention, the three-dimensional globe jigsaw puzzle structure 300 further includes a resting base 250. The top of the sphere resting base 250 is formed to allow the globe 200 to sit and rest in the resting base 250. In this embodiment the user can easily reposition the globe 200 in order to inspect various portions of the globe 200. For example, Australia is located in the lower region of the sphere and it would be difficult for a user to position the Australia puzzle plate 210. With the globe 200 resting in the resting base 250 the user can easily rotate the globe 200 so that Australia's location is position at or closer to the top. This enhances the user experience. Shown in FIG. 4C, which is a drawing illustrating an assembly embodiment of the resting base of the present invention.

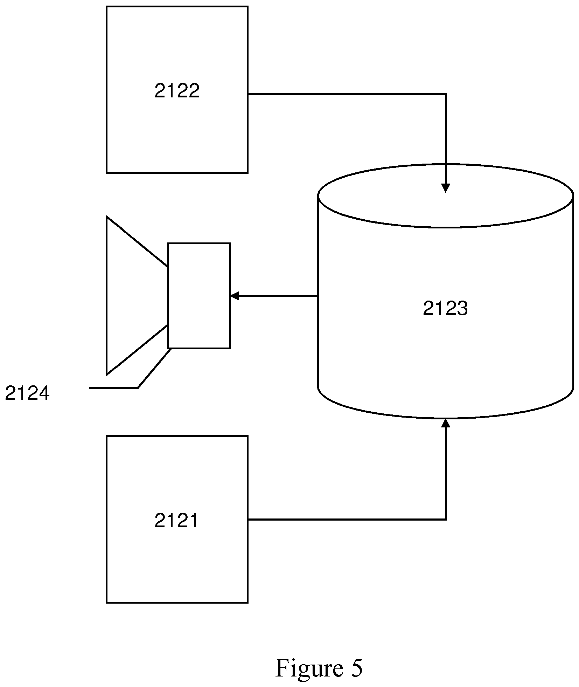

Please refer to FIG. 5, which is a drawing illustrating an embodiment of the working unit of the present invention. The working unit 212 of the three-dimensional globe jigsaw puzzle structure 300 of the present invention is used to provide voice information to prompt the users by audio signals of related geographical information corresponding to the puzzle plate 210. The working unit 212 includes a micro-switch 2121, a battery 2122, a memory 2123, and a speaker 2124. The memory 2123 is disposed inside the puzzle plate 210 to store voice information related to geographical information. The speaker 2124 is eclectically-connected to the memory 2123 to broadcast the audio signals related to geographical information. The micro-switch 2121 is eclectically-connected to the memory 2123 to generate a start signal to the memory 2123 to transmit the audio signals to the speaker 2124. The battery 2122 is eclectically-connected to the memory 2123 to supply a necessary working power to the working unit 212.

In an embodiment of the present invention may further include separate informational pieces. The informational pieces allow the globe jigsaw puzzle structure to be personalized. The informational pieces include information such as, for example, sports team, advertising, company logo, etc. For example, a multinational corporation could provide informational pieces for indicating branch office locations. Accordingly, the three-dimensional globe jigsaw puzzle structure of the present invention provides flexibility in learning. For example, basic puzzle plates such as continents can be used by beginner students and more advanced puzzle plates such as countries can be used by advanced students. Also, different students can use the same globe with different puzzle plates. Moreover, by the voice information of the working unit, the users may learn the concept of geography easily.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A three-dimensional globe jigsaw puzzle structure comprising a globe and a plurality of puzzle plates adapted to be attached to the globe, **characterized in that** the puzzle plate comprises a prompt unit for providing image information related to geographical information corresponding to the puzzle plate, and the prompt unit is disposed on a back side of the puzzle plate.

2. The three-dimensional globe jigsaw puzzle structure according to claim 1, **characterized in that** the puzzle plate further comprises a working unit for providing voice information by audio signals related to geographical information corresponding to the puzzle plate, and the working unit is disposed inside the puzzle plate.

3. The three-dimensional globe jigsaw puzzle structure according to claim 2, **characterized in that** the working unit comprising a memory to store voice information related to geographical information, which is disposed inside the puzzle plate; a micro-switch to generate a start signal to the memory, which is eclectically-connected to the memory; a speaker to broadcast the audio signals related to geographical information, which is eclectically-connected to the memory; and a battery supplying a necessary working power to the working unit, which is eclectically-connected to the memory.

4. The three-dimensional globe jigsaw puzzle structure according to claim 1, **characterized in that** the image information related to geographical information includes a country flag accessory.

5. The three-dimensional globe jigsaw puzzle structure according to claim 1, **characterized in that** the image information related to geographical information are Braille dots.

6. The three-dimensional globe jigsaw puzzle structure according to claim 1, **characterized in that** the globe is made of a metal material and comprising longitudinal and latitudinal indicators, the puzzle plates are made of magnetic materials to attach to the globe.

7. The three-dimensional globe jigsaw puzzle structure according to claim 1, **characterized in that** the puzzle plates are formed in a shape of a land mass or a water mass.

8. The three-dimensional globe jigsaw puzzle structure according to claim 1, **characterized in that** further comprising a resting base or a mounting base for holding the globe.

9. The three-dimensional globe jigsaw puzzle structure according to claim 1, **characterized in that** the puzzle plate has a terrain contour.

10. The three-dimensional globe jigsaw puzzle structure according to claim 1, **characterized in that** the puzzle plate comprising a magnetic layer and a printed layer.
